# EUROPEAN PATENT APPLICATION

(11) **EP 4 166 796 A1**
(43) Date of publication of application: **19.04.2023**
(21) Application number: 22201251.0
(22) Date of filing: 13.10.2022
(51) Int. Cl.: F16B 12/22, F16B 21/09, F16B 12/14, A47B 47/04, A47B 96/20, A47B 47/00, F16B 12/26

(54) **FIXING MECHANISM**

(30) Priority: 13.10.2021 GB 202114661; 14.01.2022 GB 202200485
(71) Applicant: Swyft Home Limited, London Greater London E15 4HF (GB)
(72) Inventor: BARROW, James, London (GB); O'LEARY, John, London (GB)
(74) Representative: Murgitroyd & Company

(57) **Abstract**

There is provided a fixing mechanism for fixing a first panel to a second panel, the fixing mechanism comprising: a first plate having a first longitudinal guide, the first guide comprising a first aperture at a first end of the first guide connected to a second aperture at an opposing second end of the first guide via a longitudinal slot; wherein the first aperture is greater than the second aperture; a second plate comprising: a second guide complementary to the first guide; and a retaining portion; an interlocking member configured to fasten the second plate to the first plate via the first and second guides; and further configured to fasten the first and second plates to the first panel; wherein the first plate and the second plate are fastened to the second panel via a second fastening means. The fixing mechanism advantageously provides a means for securely fixing two panels together, such as furniture panels, using minimal components. Additionally, assembly of the mechanism is simple and requires minimal tool usage. The fixing mechanism is robust and may be seamlessly integrated with suitable goods

## Description

### TECHNICAL FIELD

The present invention relates to a mechanism for securing two panels together. In particular, the present invention finds particular use in securing two panels of furniture together.

### BACKGROUND

Furniture may be manufactured in an unassembled state such that shipping or transport of the furniture is easier. When a user purchases the furniture, it may be provided to them as a plurality of panels that are to be joined together. Existing means for constructing the furniture often requires tools, and may require a plurality of connecting or fastening parts to correctly assemble the furniture.

The present disclosure has been devised to improve the existing construction methods.

### SUMMARY OF THE DISCLOSURE

In accordance with a first aspect of the present invention, there is provided a fixing mechanism for fixing a first panel to a second panel, the fixing mechanism comprising: a first plate having a first longitudinal guide, the first guide comprising a first aperture at a first end of the first guide connected to a second aperture at an opposing second end of the first guide via a longitudinal slot; wherein the first aperture is greater than the second aperture; a second plate comprising: a second guide complementary to the first guide; and a retaining portion; an interlocking member configured to fasten the second plate to the first plate via the first and second guides; and further configured, in use, to fasten the first and second plates to a first said; wherein the first plate and the second plate are fastened to the second panel via a second fastening means.

Preferably, the first and second apertures are substantially circular and each comprise a respective radius, such that the first aperture comprises a greater radius than the second aperture. The skilled person will understand that "first aperture is greater than the second aperture" means that the first aperture comprises a radius that is greater than a radius of the second aperture. Additionally, the skilled person will understand that the second fastening means may be any means suitable for fastening the first plate to the second plate. For example, the second fastening means may be a screw; an adhesive substance; or a bonding agent.

The present invention advantageously provides a means for securely fixing two panels together, such as furniture panels, using minimal components. Additionally, assembly of the mechanism is simple and requires minimal tool usage. The fixing mechanism is robust and may be seamlessly integrated with suitable devices.

Preferably, the interlocking member comprises: a screw head portion greater than the second aperture and less than the first aperture; a shoulder portion greater than the first aperture; an intermediate portion connecting the screw head portion to the shoulder portion, the intermediate portion comprising a thickness less than a lateral dimension of the slot; and a threaded portion extending from the shoulder portion configured to communicate with a corresponding threaded portion of the second panel. The skilled person will understand that the lateral dimension of the slot is preferably a dimension orthogonal to the longitudinal dimension of the slot. That is, the lateral dimension is preferably a width of the slot.

The screw head portion is preferably circular in cross section, such that a radius of the screw head portion is greater than a radius of the first aperture, but less than a radius of the second aperture. In this way, the screw head portion may traverse the first aperture, but may be unable to traverse the second aperture. The screw head portion is also preferably shaped like a known screw head, having a counter-sunk angle.

The shoulder portion is also preferably circular in cross section, such that a radius of the shoulder portion is greater than a radius of the first aperture. In this way, the shoulder portion may be unable to traverse the first aperture, thereby preventing further transmission of the interlocking member through the first aperture.

The intermediate portion is also preferably circular in cross section, such that the thickness is a diameter of the intermediate portion. Accordingly, the diameter of the intermediate portion is preferably less than the width of the slot. In this way, the intermediate portion may be movable along the slot. The intermediate portion is preferably unthreaded such that it may more easily move along the slot.

The threaded portion is also preferably circular in cross section, substantially similar to a known screw. A thread of the threaded portion is also preferably substantially similar to a thread of a known screw. The skilled person will appreciate that in some embodiments, the threaded portion is not the same as the known screw.

The components of the interlocking member are preferably dimensioned such that the interlocking member may be inserted into the first aperture up to the shoulder portion. The interlocking member is preferably configured to be moved across the slot of the guide such that the intermediate portion of the interlocking member is able to occupy the second aperture. Lateral movement of the interlocking member may be advantageously prevented when the intermediate portion occupies the second aperture, as the radius of the second aperture is less than the radii of the shoulder portion and the head portion.

Preferably, in a first interlocked configuration, the intermediate portion occupies the first aperture of the first guide and the first aperture of the second guide; and in a second interlocked configuration, the intermediate portion occupies the second aperture of the first guide and the second aperture of the second guide. Preferably, the interlocked configurations occur when the first plate and the second plate are adjacent and aligned such that the respective guides are also adjacent and aligned. The interlocked configurations may be alternated between by moving the intermediate portion along the guides.

Preferably, the retaining portion is a flexible portion of the second guide adjacent the second aperture of the second guide. In preferable embodiments, the flexible portion of the second guide comprises a retention bump configured to retain the interlocking member. In preferable embodiments, the flexible portion comprises a pair of opposing retention bumps configured to retain the interlocking member, positioned abutting a perimeter of the second guide. In particular, the retention bumps are preferably configured to prevent longitudinal movement of the interlocking member. In use, the retention bump is preferably configured to flex in response to a force applied by the intermediate portion, such that the intermediate portion is able to occupy the second aperture.

Preferably, the second plate comprises a flexible material. In some embodiments, the flexible material is Nylon 6. Advantageously, the second plate forms a unified structure having flexibility. The skilled person will appreciate that the flexible material may be any material suitable for providing sufficient flexibility for the retention bumps to flex, whilst being robust. In some embodiments, a portion of the second plate comprises a flexible material. The flexible portion preferably comprises the retaining portion.

In preferable embodiments, the second plate comprises a recessed portion comprising the second aperture of the second plate, and wherein the recessed portion is configured to flex in response to a lateral force. Advantageously, the recessed portion allows for an improved production tolerance. Further advantageously, the recessed portion allows for slight deviations in the lateral position of the interlocking member when the interlocking member is screwed into the first panel.

In preferable embodiments, the retaining portion is a pair of opposing retention bumps protruding from an edge of the slot. In further preferable embodiments, the flexible portion further comprises a pair of relief slots, each being adjacent to a respective retention bump. The relief slots are preferably configured to release stress introduced by the flexing of the retention bumps.

Preferably, the second fastening means comprises: the first plate further comprising a first panel fastening aperture; and the second plate further comprising a second panel fastening aperture; wherein the first and second panel fastening apertures are configured to align when the first and second plates are interlocked; and wherein the first and second panel fastening apertures are configured to accept a screw. The panel fastening apertures are preferably of substantially similar dimensions. Advantageously, the second fastening means provides a more secure join between the first and second plates as the screw may occupy the fastening apertures, thereby restricting longitudinal and lateral movement of the plates with respect to each other.

Preferably, the first panel fastening aperture comprises a chamfered perimeter wall such that the first panel fastening aperture has a varying radius across a lateral axis of the first panel, the chamfered perimeter wall corresponding to a countersink angle of the screw. That is, the radius of the first panel fastening aperture varies across a depth of the first panel. The skilled person will understand that the radius of the first panel fastening aperture may vary across only a portion of the depth, such that the radius is constant along a portion of the depth.

Preferably, the dimensions of the second guide correspond to the dimensions of the first guide. Further preferably, the principal dimensions of the second guide are substantially similar to the principal dimensions of the second guide. In this way, movement of the interlocking member across the first guide corresponds to a movement of across the second guide.

Preferably, the second guide comprises a head guide configured to guide the screw-head portion between the first aperture and the second aperture. Preferably, the head guide comprises a guide wall extending outwards from a perimeter of the second guide. In some embodiments, the guide wall extends outwards from a portion of the second guide perimeter. Preferably, the guide wall extends outwards from a second side of the second plate opposing a first side of the second plate, wherein the first side of the second plate is configured to contact the first plate in use. Preferably, the guide wall comprises a depth that increases along the longitudinal axis of the second guide. In this way, as the interlocking member, in particular the head portion, moves along the guide wall, the shoulder portion is urged towards the first plate. The depth may vary constantly. Alternatively, the depth may vary along a first portion and then plateau along a second portion. Preferably, the guide wall comprises a chamfer portion having an angle corresponding to a countersink angle of the screw head portion of the interlocking member.

In accordance with a second aspect of the present invention, there is provided a fixing mechanism for fixing a first panel to a second panel, the fixing mechanism comprising: a first plate having a first longitudinal guide, the first guide comprising a first aperture at a first end of the first guide connected to a second aperture at an opposing second end of the first guide via a longitudinal slot; wherein the first aperture is greater than the second aperture; and a second plate comprising: a second guide complementary to the first guide; and a retaining portion; wherein the first plate and the second plate are fastened to the second panel via a second fastening means.

In accordance with a third aspect of the present invention, there is provided a fastening structure comprising: a first panel; a second panel; a first plate having a first longitudinal guide, the first guide comprising a first aperture at a first end of the first guide connected to a second aperture at an opposing second end of the first guide via a longitudinal slot; wherein the first aperture is greater than the second aperture; a second plate comprising: a second guide complementary to the first guide; and a retaining portion; an interlocking member configured to fasten the second plate to the first plate via the first and second guides; and further configured to fasten the first and second plates to a first said panel; wherein the first plate and the second plate are fastened to the second panel via a second fastening means, such that the first and second panels are fastened.

### BRIEF DESCRIPTION OF THE DRAWINGS

One or more embodiments of the disclosure will now be described, by way of example only, with reference to the accompanying drawings, in which:
Figure 1 is an expanded view of a fixing mechanism according to the present invention;
Figure 2 is a perspective view of a shoulder screw;
Figure 3 is a top-down view of a bracket accommodating the shoulder screw;
Figure 4a is a perspective view of a top side of a runner;
Figure 4b is a top-down view of a bottom side of the runner;
Figure 4c is a perspective view of a top side of an alternative embodiment of a the runner;
Figure 5a is a side view of the fixing mechanism in an interlocked configuration; and
Figure 5b is a side view of the fixing mechanism in the interlocked configuration, in use with two panels.

### DETAILED DESCRIPTION

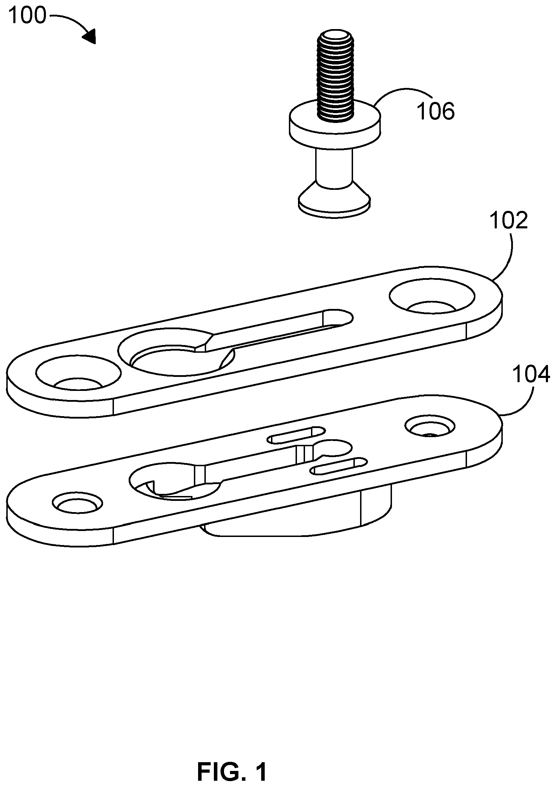

Figure 1 is a blown-up perspective view of a fixing mechanism 100 according to the present invention. The fixing mechanism comprises a first plate 102; a second plate 104; and an interlocking member 106. The first plate 102 is a bracket 102 constructed of a metal material, wherein the metal material is Mild steel. The second plate is a runner 104 constructed of nylon, and more particularly Nylon 6. The interlocking member is a shoulder screw 106 constructed of a metal material, wherein the metal material is Mild steel.

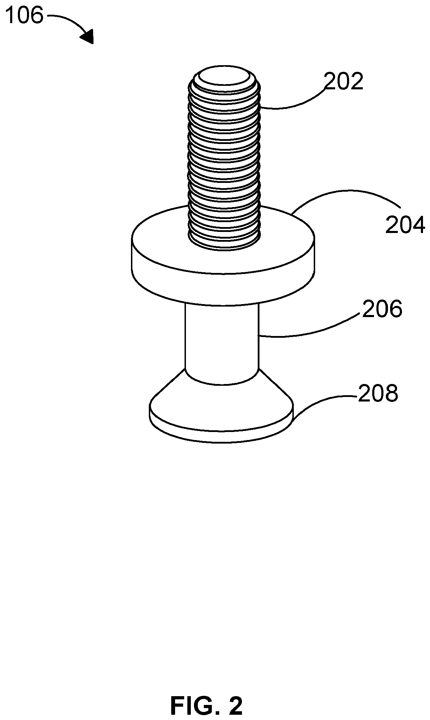

Figure 2 is a perspective view of the shoulder screw 106. The shoulder screw 106 comprises a threaded portion 202; a shoulder portion 204; a non-threaded portion 206; and a head portion 208. The head portion 208 forms a proximal end of the shoulder screw 106, whilst the threaded portion 202 forms a distal end. A first end of the non-threaded portion 206 extends from the head portion 208 and connects to a face of the shoulder portion 204 at an opposing second end of the non-threaded portion 206. The threaded portion 202 extends from an opposing face of the shoulder portion 204.

Each component of the shoulder screw 106 comprises a circular cross section. A radius of the shoulder portion 204 is greater than a radius of the head portion 208. The shoulder portion radius and the head portion radius are both greater than a radius of the threaded portion 202 and a radius of the non-threaded portion 206. In the present example, the threaded portion radius and the non-threaded portion radius are substantially similar. The skilled person will understand that the threaded portion radius and the non-threaded portion radius may be different.

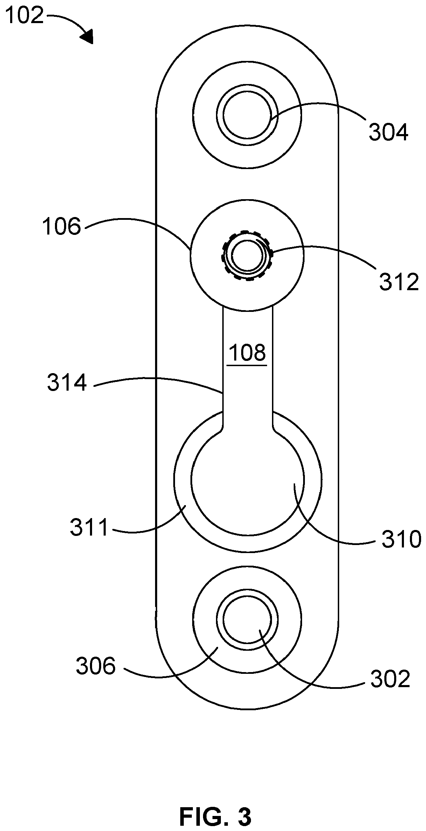

Figure 3 is a top-down view of the bracket 102 accommodating the shoulder screw 106, wherein the threaded portion 202 of the shoulder screw 106 coming out of the page. The bracket 102 is generally shaped like a rounded rectangle. In some embodiments, the bracket 102 comprises a generally rounded first end, and a generally triangular second end having a rounded tip. The bracket 102 comprises a depth of 2 mm. The skilled person will appreciate that the bracket 102 may be any shape suitable for accommodating the components of the bracket 102.

Proximate a first end of the bracket 102, there is located a first bracket fastening aperture 302. The first bracket fastening aperture 302 comprises a chamfered region 306. In particular, the first bracket fastening aperture 302 comprises a lower radius and an upper radius, wherein the lower radius is separated from the upper radius by the depth of the bracket 102. The chamfered region 306 comprises a varying radius between the lower radius and the upper radius of the first bracket fastening aperture 302. The lower radius is suitable for accommodating a known screw, whilst preventing the screw from traversing the first bracket fastening aperture 302. The upper radius is suitable for accommodating a head of the known screw. For example, the lower radius may be 2 mm, whilst the upper radius may be 4 mm. The chamfered region 306 is configured to accommodate the head such that a flat end of the known screw is flush with a surface of the bracket 102. In particular, the chamfered region 306 comprises an angle corresponding to a countersink angle of the known screw.

Proximate an opposing second end of the bracket 102, there is located a second bracket fastening aperture 304, having a matching shape to the first fastening aperture. The second bracket fastening aperture 304 is also configured to accommodate a known screw.

Occupying a central region of the bracket 102 is a bracket guide 308. The bracket guide 308 comprises a first bracket guide aperture 310; a second bracket guide aperture 312; and a longitudinal bracket slot 314. The first bracket guide aperture 310 occupies a first end of the bracket guide 308, whilst the second bracket guide aperture 312 occupies an opposing second end of the bracket guide 308. The bracket slot 314 connects the first bracket guide aperture 310 to the second bracket guide aperture 312. The first bracket guide aperture 310 is greater than the second guide aperture 312. In particular, a radius of the first guide first bracket guide aperture 310 is greater than a radius of the second guide aperture 312.

The first bracket guide aperture 310 is dimensioned to allow the head portion 208 of the shoulder screw 106 to traverse the first bracket guide aperture 310. Additionally, the first guide first bracket guide aperture 310 is configured to accommodate the non-threaded portion 206 of the shoulder screw 106, whilst inhibiting movement of the shoulder portion 204 through the first bracket guide aperture 310. In particular, the first bracket guide aperture 310 comprises a radius greater than a radius of the head portion 208, but less than a radius of the shoulder portion 204. Accordingly, when the shoulder screw 106 occupies the first bracket guide aperture 310, lateral movement of the shoulder screw 106 is prevented in a first lateral direction. In the present example, the first bracket guide aperture 310 comprises a chamfered region 311, such that the first bracket guide aperture 310 comprises a lower radius and an upper radius, wherein the lower radius is separated from the upper radius by the depth of the bracket 102 The chamfered region 311 guides the head portion 208 of the shoulder screw 106 into the aperture 310.

The longitudinal bracket slot 314 extends from the first bracket guide aperture 310 to the second bracket guide aperture 312. The bracket slot 314 comprises a width configured to accommodate the non-threaded portion 206 of the shoulder screw 106.

The second bracket guide aperture 312 is configured to accommodate the non-threaded portion 206 of the shoulder screw 106. The second bracket guide aperture 312 is also configured to block lateral movement of the shoulder portion 204 and the head portion 208 through the bracket 102. In particular, the aperture 312 comprises a radius lower than a radius of both the shoulder portion 204 and the head portion 208. Accordingly, when the shoulder screw 106 occupies the second bracket guide aperture 312, lateral movement of the shoulder screw 106 is prevented in both the first lateral direction and a second, opposing, lateral direction. In the present example, a radius of the second bracket guide aperture 312 is the same as the width of the slot.

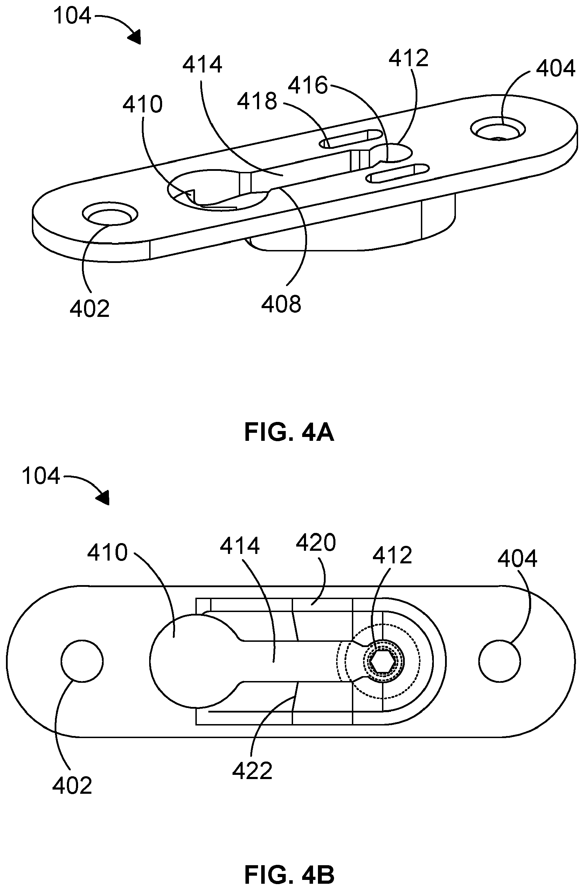

Turning now to Figure 4a, there is shown a perspective view of a top side of the runner 104. The runner 104 is generally shaped like a rounded rectangle, corresponding to the shape of the bracket 102, and comprises a depth of 2 mm. In some embodiments, the bracket 102 comprises a generally rounded first end, and a generally triangular second end having a rounded tip.

Proximate a first end of the runner 104, there is located a first runner fastening aperture 402 configured, in use, to align with the first bracket fastening aperture 302 of the bracket 102. The first runner fastening aperture 402 is configured to accommodate the known screw discussed in relation to the first bracket fastening aperture 302. The first runner fastening aperture 402 comprises a radius matching the lower radius of the first bracket fastening aperture 302.

Proximate an opposing second end of the runner 104, there is located a second runner fastening aperture 404 configured, in use, to align with the second bracket fastening aperture 304 of the bracket 102. The second runner fastening aperture 404 is also configured to accommodate the known screw discussed in relation to the second bracket fastening aperture 304, and comprises a radius matching the lower radius of the fastening aperture 304.

Occupying a central region of the runner 104 is a runner guide 408. The runner guide 408 comprises a first runner guide aperture 410; a second runner guide aperture 412; and a longitudinal runner slot 414. The first runner guide aperture 410 occupies a first end of the runner guide 408, whilst the second runner guide aperture 412 occupies an opposing second end of the runner guide 408. The runner slot 414 connects the first runner guide aperture 410 to the second runner guide aperture 412. The first runner guide aperture 410 is greater than the second runner guide aperture 412.

The first runner guide aperture 410 is configured to allow the head portion 208 of the shoulder screw 106 to traverse the first runner guide aperture 410. Additionally, the first runner guide aperture 410 is configured to accommodate the non-threaded portion 206 of the shoulder screw 106, whilst inhibiting lateral movement of the shoulder portion 204 through the runner 104 in a first lateral direction. In particular, the first runner guide aperture 410 comprises a radius substantially similar to the lower radius of the first bracket guide aperture 310. The skilled person will understand that, in use, the first bracket guide aperture 310 blocks lateral movement of the shoulder portion 204 through the mechanism 100.

The longitudinal runner slot 414 extends from the first runner guide aperture 410 to the second runner guide aperture 412. The runner slot 414 comprises a width configured to accommodate the non-threaded portion 206 of the shoulder screw 106.

A pair of opposing retention bumps 416 separate the runner slot 414 from the second runner guide aperture 412. A bump separation (i.e. a distance between the retention bumps 416) is of a lower distance than the radius of the non-threaded portion 206 of the shoulder screw 106. Accordingly, the retention bumps 416 prevent and inhibit longitudinal movement of the shoulder screw 106, the prevented longitudinal movement being in a direction towards the second runner guide aperture 412.

Adjacent to each of the retention bumps 416, there is located a respective relief slit 418. The relief slits 418 are configured to facilitate flexing of the retention bumps 416. Accordingly, in use, applying a longitudinal force to the shoulder screw 106 causes the retention bumps 416 to flex from a first position to a second position, thereby increasing the bump separation and allowing the non-threaded portion 206 to enter the second runner guide aperture 412. The retention bumps 416 subsequently return to the first position and restrict further longitudinal movement of the shoulder screw 106, unless a substantial force is applied in a longitudinal direction towards the first runner guide aperture 410.

The second runner guide aperture 412 is configured to accommodate the non-threaded portion 206 of the shoulder screw 106, whilst inhibiting lateral movement of the shoulder portion 204 and the head portion 208 through the runner 104. In particular, the aperture 412 comprises a radius lower than a radius of both the shoulder portion 204 and the head portion 208. Accordingly, when the shoulder screw 106 occupies the second runner guide aperture 412, lateral movement of the shoulder screw 106 is prevented in both directions. Additionally, due to the presence of the retention bumps, longitudinal movement of the shoulder screw 106 is also prevented and as such, the shoulder screw 106 is secured in position. In the present example, a radius of the second runner guide aperture 412 is the same as the width of the runner slot 414.

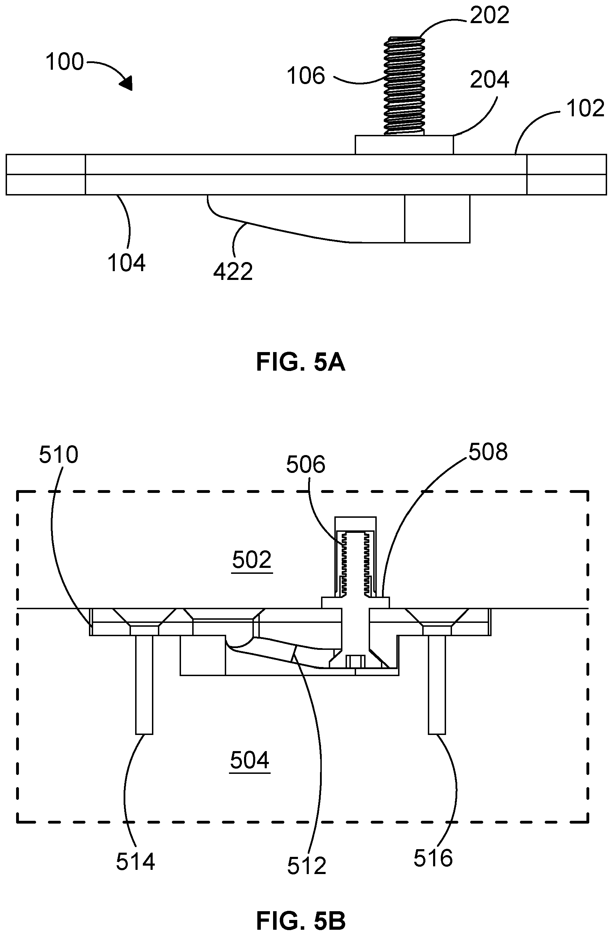

Turning now to Figure 4b, there is shown a top-down view of a bottom side of the runner 104. The bottom side of the runner 104 comprises a screw-head guide 420. The screw-head guide 420 extends from a perimeter of the runner guide 408. In the present example, the screw-head guide 420 surrounds the full perimeter of the second runner guide aperture 412, the full perimeter of the runner slot 414, but only a portion of the perimeter of the first runner guide aperture 410. The screw-head guide 420 has a depth that varies along a longitudinal axis of the screw-head guide 420, more clearly depicted in Figure 5b. The chamfer portion 422 also comprises an angle and depth corresponding to a counter-sunk angle and depth of the head portion 208, such that a flat end of the head portion 208 is flush with an outer surface of the screw-head guide 420.

When the shoulder screw 106 occupies the first bracket guide aperture 310 and the first runner guide aperture 410, a length of the non-threaded portion 206 is greater than the combined depths of the bracket 102 and the runner 104, such that there is some lateral freedom of movement. When the shoulder screw 106 is moved along the guides 308, 408, the varying depth of the screw head guide 420 urges the shoulder portion 204 of the shoulder screw 106 closer to the bracket 102. The varying depth of the screw-head guide 420 is configured such that when the non-threaded portion 206 occupies the second bracket guide aperture 312 and the second runner guide aperture 412, the shoulder portion 204 is in contact with the bracket 102.

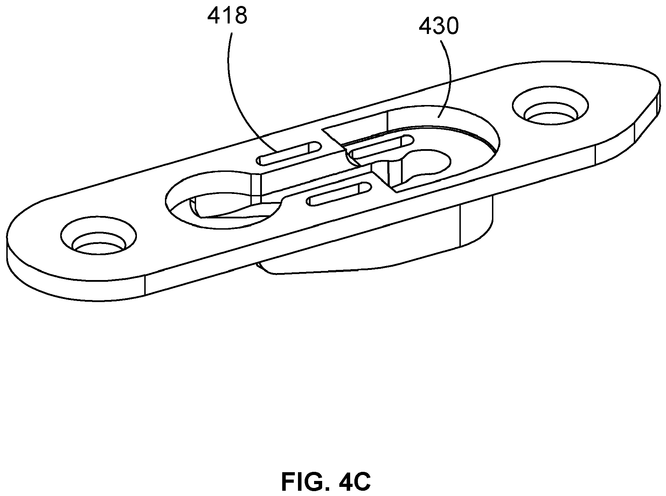

An alternative embodiment of a runner 104' is depicted in Figure 4c, which shows a perspective view of the runner 104'. The runner 104' is substantially similar in shape to the runner 104. However, the runner 104' comprises a recessed portion 430 having a depth. The recessed portion 430 comprises the second runner guide aperture 412, the retention bumps 416, and the relief slits 418. The recessed portion 430 is configured such that, in use, a lateral force exerted by the shoulder screw 106 when the head portion 208 is moved along the chamfer portion 422 causes the recessed portion 430 to flex. Accordingly, the recessed portion 430 allows for an improved production tolerance. The runner 104' further comprises a pair of relief slits 432, each adjacent to an opposing side of the longitudinal runner slot 414.

The mechanism 100 will now be described in use with two panels, with respect to Figure 5a and Figure 5b. Figure 5a shows a side view of the fixing mechanism 100 in an interlocked configuration. That is, when the shoulder screw 106 occupies the second bracket guide aperture 312 and the second runner guide aperture 412. Figure 5b shows a cross-sectional side view of the fixing mechanism 100 in the interlocked configuration, in use with a first panel 502 and a second panel 504.

The first panel 502 comprises a threaded cavity 506, the threaded cavity 506 being a threaded insert 506 in the present example. The threaded insert 506 is threaded such that it corresponds to the threaded portion 202 of the shoulder screw 106. The first panel 502 also comprises a shoulder portion indent 508 configured to accommodate the shoulder portion 204 when the first panel 502 is fastened to the second panel 504.

The second panel 504 comprises a plate indent 510 configured to accommodate the bracket 102 and the runner 104. In particular, the plate indent 510 comprises a depth matching the combined depth of the bracket 102 and the runner 104, such that when the fixing mechanism is fastened to the second panel 504, a surface of the bracket 102 is flush with a face of the second panel 504. The second panel 504 additionally comprises a guide indent 512 configured to accommodate the screw-head guide 420. Finally, the second panel 504 comprises a first screw indent 514 and a second screw indent 516, each being configured to accommodate a shank of a respective screw. The screw indents 514, 516 are positioned such that, in use, they are aligned with respective fastening aperture pairs 302, 402, 304, 404.

In use, the runner 104 is placed within the plate indent 510 in such a way that the screw-head guide 420 occupies the guide indent 512. The bracket 102 is placed adjacent, or on top of, the runner 104 such that the bracket 102 and runner 104 are aligned and both occupy the plate indent 510.

The bracket 102 and the runner 104 are fastened to the second panel 504 by inserting a first screw through the first bracket fastening aperture 302 followed by the first runner fastening aperture 402. The first screw is rotated such that the shank of the first screw occupies the first screw indent 514, and a flat face of the first screw is flush with a surface of the bracket 102. A corresponding action is taken with a second screw and the second bracket fastening aperture 304, the second runner fastening aperture 404, and the second screw indent 516.

In order to fasten the first panel 502 to the second panel 504, the shoulder screw 106 is screwed into the threaded cavity 506 such that the threaded portion 202 occupies the threaded cavity 506 and the shoulder portion 204 occupies the shoulder portion indent 508 of the first panel 502. Next, the shoulder screw 106, now affixed to the first panel 502, is inserted through the first bracket guide aperture 310 and the first runner guide aperture 410. In this position, the panels 502, 504 are not fixed as the radius of the head portion 208 is less than the radius of the guide apertures 310, 410. In order to fasten the panels 502, 504 together, the shoulder screw 106 is urged across the slots 314, 414 of the guides 308, 408. This may be done by moving the panels 502, 504 relative to each other. In doing so, the screw-head guide 420 urges the first panel 502 closer to the second panel 504. Upon reaching the retention bumps 416 of the runner guide 408, a force is applied such that the retention bumps 416 flex to the second position. The non-threaded portion 206 occupies the second guide apertures 312, 412 and the retention bumps 416 return to the first position, thereby preventing longitudinal movement of the shoulder screw 106 and by proxy, the first panel 502.

In use with the runner 104', the recessed portion 430 allows for slight deviations in the lateral position of the shoulder screw 106 when the shoulder screw 106 is screwed into the first panel 502.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A fixing mechanism for fixing a first panel to a second panel, the fixing mechanism comprising:
a first plate having a first longitudinal guide, the first guide comprising a first aperture at a first end of the first guide connected to a second aperture at an opposing second end of the first guide via a longitudinal slot;
wherein the first aperture is greater than the second aperture;
a second plate comprising:
a second guide complementary to the first guide; and
a retaining portion;
an interlocking member configured to fasten the second plate to the first plate via the first and second guides; and further configured, in use, to fasten the first and second plates to a first said panel;
wherein the first plate and the second plate are fastened to the second panel via a second fastening means.

2. The fixing mechanism of claim 1, wherein the interlocking member comprises:
a screw head portion greater than the second aperture and less than the first aperture;
a shoulder portion greater than the first aperture;
an intermediate portion connecting the screw head portion to the shoulder portion, the intermediate portion comprising a thickness less than a lateral dimension of the slot; and
a threaded portion extending from the shoulder portion configured to communicate with a corresponding threaded portion of the second panel.

3. The fixing mechanism of claim 2, wherein:
in a first interlocked configuration, the intermediate portion occupies the first aperture of the first guide and the first aperture of the second guide; and
in a second interlocked configuration, the intermediate portion occupies the second aperture of the first guide and the second aperture of the second guide.

4. The fixing mechanism of any preceding claim, wherein the first and second apertures are substantially circular and each comprise a respective radius, such that the first aperture comprises a greater radius than the second aperture.

5. The fixing mechanism of any preceding claim, wherein the retaining portion is a flexible portion of the second guide adjacent the second aperture of the second guide.

6. The fixing mechanism of claim 5, wherein the flexible portion of the second guide comprises a retention bump configured to retain the interlocking member.

7. The fixing mechanism of any preceding claim, wherein the second fastening means comprises:
the first plate further comprising a first panel fastening aperture; and
the second plate further comprising a second panel fastening aperture;
wherein the first and second panel fastening apertures are configured to align when the first and second plates are interlocked; and
wherein the first and second panel fastening apertures are configured to accept a screw.

8. The fixing mechanism of claim 7, wherein the first panel fastening aperture comprises a chamfered perimeter wall such that the first panel fastening aperture has a varying radius across a lateral axis of the first panel, the chamfered perimeter wall corresponding to a countersink angle of the screw.

9. The fixing mechanism of any preceding claim, wherein the dimensions of the second guide correspond to the dimensions of the first guide.

10. The fixing mechanism of any of claims 2 to 9, wherein the second guide comprises a head guide configured to guide the screw-head portion between the first aperture and the second aperture.

11. The fixing mechanism of claim 10, wherein the head guide comprises a guide wall extending outwards from a perimeter of the second guide.

12. The fixing mechanism of claim 11, wherein the head guide comprises a guide wall extending outwards from a perimeter of the second guide.

13. The fixing mechanism of claim 12, wherein the guide wall comprises a chamfer portion having an angle corresponding to a countersink angle of the screw head portion of the interlocking member.

14. The fixing mechanism of any of claims 5 to 13, wherein the flexible portion is Nylon 6.

15. The fixing mechanism of any preceding claim, wherein the second plate comprises a recessed portion comprising the second aperture of the second plate, and wherein the recessed portion is configured to flex in response to a lateral force.

16. A fixing mechanism for fixing a first panel to a second panel, the fixing mechanism comprising:
a first plate having a first longitudinal guide, the first guide comprising a first aperture at a first end of the first guide connected to a second aperture at an opposing second end of the first guide via a longitudinal slot;
wherein the first aperture is greater than the second aperture; and
a second plate comprising:
a second guide complementary to the first guide; and
a retaining portion;
wherein the first plate and the second plate are fastened to the second panel via a second fastening means.

17. A fastening structure comprising:
a first panel;
a second panel;
a first plate having a first longitudinal guide, the first guide comprising a first aperture at a first end of the first guide connected to a second aperture at an opposing second end of the first guide via a longitudinal slot;
wherein the first aperture is greater than the second aperture;
a second plate comprising:
a second guide complementary to the first guide; and
a retaining portion;
an interlocking member configured to fasten the second plate to the first plate via the first and second guides; and further configured to fasten the first and second plates to a first said panel;
wherein the first plate and the second plate are fastened to the second panel via a second fastening means, such that the first and second panels are fastened.
